# DEMANDE DE BREVET EUROPEEN

(11) **EP 0 863 556 A1**
(43) Date de publication de la demande: **09.09.1998**
(21) Numéro de dépôt: 98400514.0
(22) Date de dépôt: 04.03.1998
(51) Int. Cl.: H01L 41/09

(54) **Appareil piezo-électrique d'avance pas à pas**

(30) Priorité: 06.03.1997 FR 9702683
(71) Demandeur: Intertechnique, 78373 Plaisir Cedex (FR)
(72) Inventeur: Cocoynacq, Gérard, 42000 Saint-Etienne (FR)
(74) Mandataire: Fort, Jacques

(57) **Abrégé**

L'appareil comprend au moins un collier (12) entourant l'arbre (10) et serrable sur l'arbre pour immobiliser l'arbre en rotation par rapport à un boîtier (18), commandé par un premier actionneur piézoélectrique (14), au moins un second actionneur piézoélectrique (16) ayant avec l'arbre un couplage lui permettant de faire tourner l'arbre d'un pas d'avance dans un sens déterminé par rapport au boîtier lorsqu'il est excité et de revenir à son état d'origine sans faire tourner l'arbre et des moyens de commande des actionneurs, suivant une séquence déterminée.

## Description

L'invention a pour objet un appareil d'avance d'un élément rotatif pas à pas, utilisant comme élément moteur un actionneur piézo-électrique. On connaît déjà de tels actionneurs, constitués par un empilement de pastilles de matériaux piézo-électriques, utilisés pour provoquer des déplacements de faible amplitude.

L'invention vise à fournir un appareil d'avance permettant de faire tourner un arbre, pas à pas, au moins dans une direction, pouvant être réalisé sans difficulté sous une forme permettant de provoquer une rotation dans un sens ou dans l'autre, à volonté.

L'invention propose notamment dans ce but un appareil suivant la revendication 1.

L'invention est réalisable sous de nombreuses formes, entre lesquelles on choisira en fonction de l'application envisagée.

Dans une forme utilisable lorsqu'il est nécessaire de faire tourner l'arbre dans l'un ou l'autre de deux sens opposés, l'appareil comprendra en général deux premiers actionneurs et deux seconds actionneurs. Ces actionneurs peuvent être répartis en deux ensembles disjoints ayant chacun un premier actionneur et un second actionneur. Le premier actionneur et le second actionneur peuvent être placés côte à côte dans le sens axial, de façon que leur encombrement radial ne soit pas supérieur à celui d'un seul actionneur. Dans une autre variante de réalisation, on peut utiliser un montage qu'on peut considérer comme en cascade, qui conduit à un encombrement axial qui est le même que celui d'un seul actionneur, mais un encombrement radial accru.

Dans les deux cas, le second actionneur de chaque couple est généralement interposé entre le boîtier de l'appareil et le collier desserrable par le premier actionneur. Ainsi, le second actionneur peut entraîner le collier d'un pas angulaire lorsqu'il est excité et que le collier est fermé. Dans ce cas, le collier de l'autre couple est débloqué pendant que le collier du premier actionneur du premier couple est fermé.

Les caractéristiques ci-dessus, ainsi que d'autres, apparaîtront mieux à la lecture de la description qui suit de modes particuliers de réalisation de l'invention, donnés à titre d'exemples non limitatifs. La description se réfère aux dessins qui l'accompagnent, dans lesquels :
- la figure 1 est un schéma de principe d'un mode de réalisation particulièrement simple, ne permettant de faire tourner un arbre que dans un seul sens ;
- la figure 2, similaire à la figure 1, montre un mode de réalisation comportant deux premiers actionneurs, permettant de faire tourner l'arbre dans un sens ou dans l'autre ;
- la figure 3 montre une variante de la figure 1 ;
- la figure 4, encore similaire à la figure 1, montre encore un autre appareil, comportant deux seconds actionneurs, permettant de faire tourner l'arbre dans un sens ou dans l'autre ;
- la figure 5 montre une constitution possible d'actionneur conforme au schéma de la figure 1 ; et
- la figure 6, similaire à la figure 5, est une vue éclatée d'une variante de réalisation, à deux couples d'un premier et d'un second actionneur, réalisable sous un encombrement radial plus réduit que celui de la figure 5.

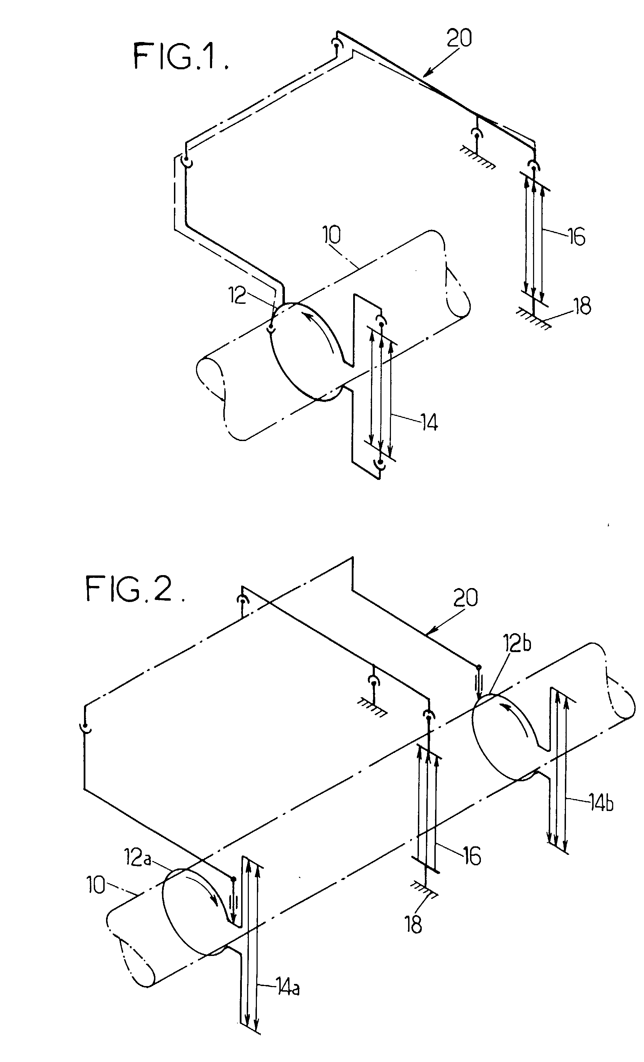

Comme le montre la figure 1, l'appareil exige, même lorsqu'il est destiné à faire tourner un arbre 10 dans un seul sens, au moins un collier 12, ce collier entoure l'arbre et il est serré sur l'arbre ou desserré suivant l'état d'un premier actionneur piézo-électrique 14. Un second actionneur 16 a avec l'arbre un couplage lui permettant de faire tourner l'arbre d'un pas d'avance dans un sens déterminé par rapport à un boîtier schématisé en 18. Le collier 12 est schématisé sur la figure 1 comme en deux parties reliées par une articulation élastique exerçant un effort qui tend à serrer le collier sur l'arbre. Dans la pratique, le collier sera généralement d'une seule pièce, avec une forme au repos telle qu'il tend à serrer l'arbre, et le premier actionneur piézo-électrique 14 est interposé entre les extrémités du collier.

Dans le mode de réalisation montré en figure 1, le second actionneur 16 est interposé entre le boîtier 18 et une tringlerie 20 reliée au collier 12. La séquence d'actionnement est alors la suivante. Pour faire avancer l'arbre d'un pas, le second actionneur 16 est excité, alors que le premier actionneur 14 est au repos. La force d'expansion exercée par le second actionneur 16 avance d'un pas le collier 12 et l'arbre 10, sur lequel il est serré. Le premier actionneur 14 est ensuite excité pour desserrer le collier et le second actionneur est désexcité. La force faible de contraction que l'actionneur 16 est capable d'exercer est suffisante pour ramener la tringlerie dans sa position d'origine. On cesse alors d'exciter le premier actionneur 14 qui immobilise alors l'arbre, puisque le collier 12 se serre de nouveau. L'arbre reste immobilisé par la chaîne cinématique constituée par la tringlerie 20 et le second actionneur 16.

La figure 2, où les éléments correspondant à ceux de la figure 1 portent le même numéro de référence, montre un appareil permettant de faire avancer l'arbre 10 dans l'un ou l'autre de deux directions opposées. Il comporte un seul second actionneur 16, mais deux premiers actionneurs 14a et 14b. La tringlerie 20 permet de faire avancer l'arbre dans un sens ou dans l'autre suivant celui des deux colliers 12a et 12b qui est serré lorsqu'on excite le premier actionneur 16. Au repos, les deux colliers 12a et 12b sont serrés sur l'arbre. Ce dernier est donc immobilisé par la tringlerie 20 et l'actionneur 16, lui aussi désexcité.

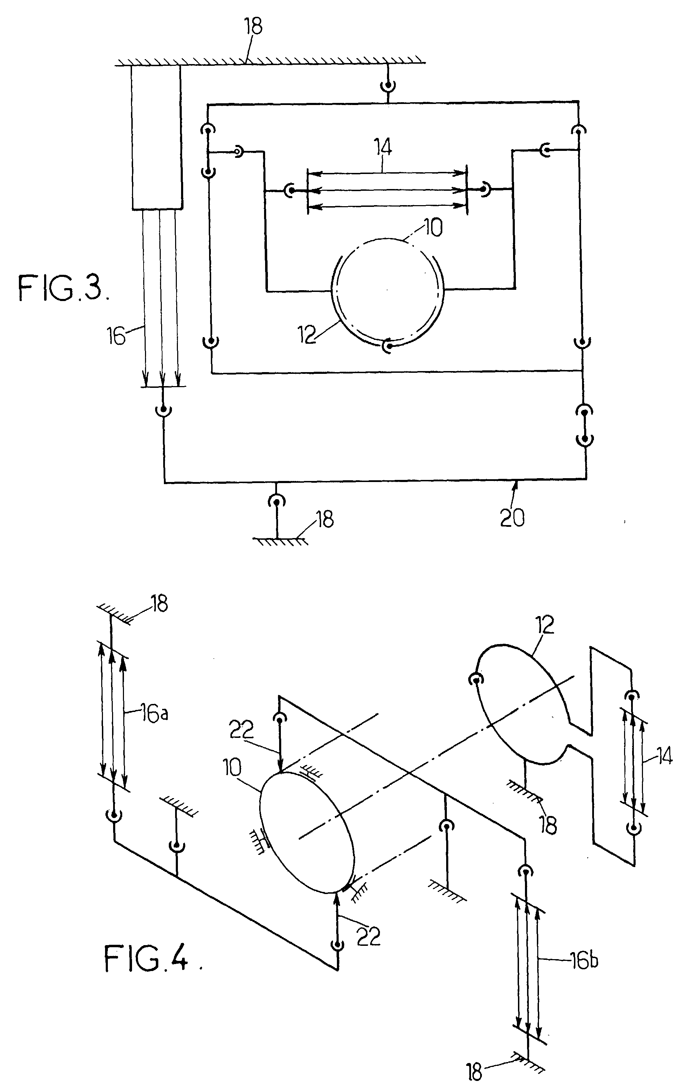

La figure 3 montre une variante de réalisation de la figure 1, ne permettant de faire tourner l'arbre 10 que dans un seul sens, utilisant une tringlerie 20 en forme de parallélogramme déformable, plus rigide que celle montrée en figure 1.

L'appareil schématisé en figure 4 permet de faire avancer l'arbre 10 dans un sens ou dans l'autre. S'il comporte un seul premier actionneur 14 qui desserre le collier 12 lorsqu'il est excité et libère alors l'arbre 10 par rapport au collier refixé au boîtier 18. Deux seconds actionneurs 16a et 16b sont prévus et sont destinés à déplacer l'arbre chacun dans un sens. Chacun de ces actionneurs 16a et 16b est relié par une tringlerie respective à un patin 22 (ou des patins) d'appui sur l'arbre 10. Les patins 22 peuvent avoir une face inclinée de façon à présenter une surface d'appui plus importante sur l'arbre.

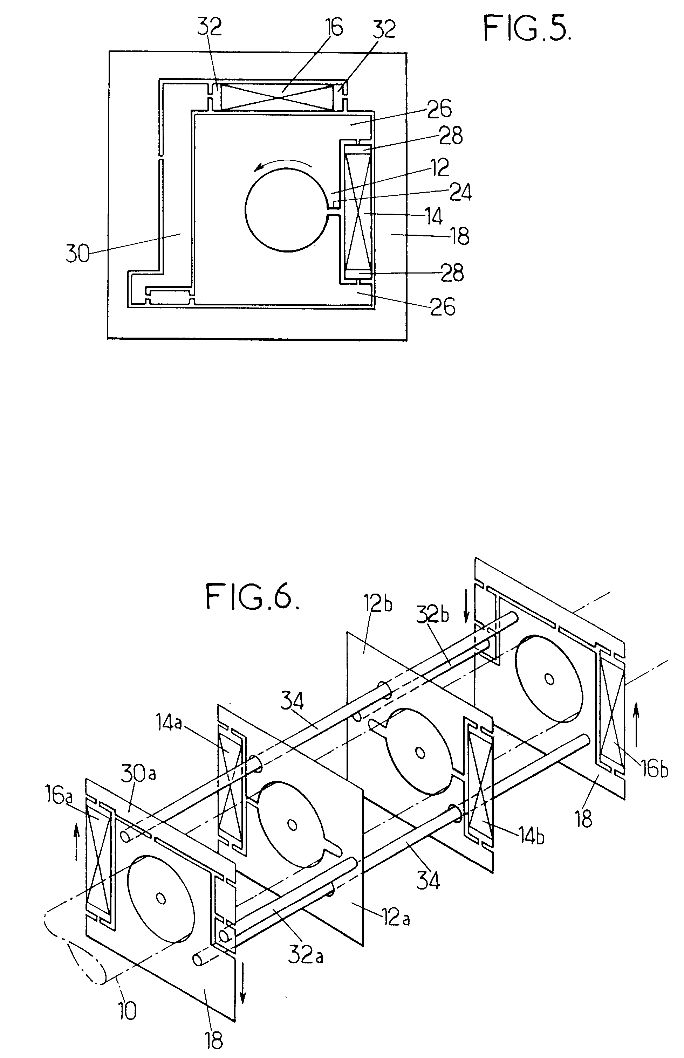

La figure 5 montre une répartition réelle possible des composants d'un appareil du genre montré en figure 1. Le boîtier 18 et la tringlerie 20 peuvent être monobloc. Le boîtier est à section droite sensiblement carrée et il entoure le collier 12, constitué par une partie centrale du bloc, percée d'un alésage de réception de l'arbre, ouvert par une fente radiale 24. Le collier présente, de part et d'autre de la fente radiale 24, des prolongements 26 reliés, par des zones amincies formant charnière, à des pastilles 28 d'appui de l'actionneur 14 orthogonal à la fente 24. Le collier 12 est relié, par l'intermédiaire d'un levier 30 appartenant à la tringlerie et par l'intermédiaire de zones amincies, à une autre pastille 32 d'appui de l'actionneur 16. L'actionneur 16 est avantageusement perpendiculaire à l'actionneur 16. Des zones minces jouent encore le rôle de charnières.

La variante de réalisation de la figure 6 présente, comparée à celle de la figure 5, un moindre encombrement radial. Pour cela les actionneurs 14 et 16 appartiennent à deux galettes séparées, placées l'une contre l'autre et reliées par des tiges de solidarisation. L'appareil de la figure 6, contrairement à celui de la figure 5, permet de faire tourner l'arbre 10 dans les deux sens. Cela conduit à le constituer de quatre galettes superposées. On décrira uniquement un seul des deux couples de galettes, comportant les actionneurs 14a et 16a.

Le levier 30a appartenant à la première galette est relié par une tige de transmission de mouvement 32a au collier 12a, desserrable par l'actionneur 14a. Les tiges 34 reliant les deux parties du boîtier 18 traversent les colliers 12a et 12b avec un jeu suffisant pour permettre le déplacement angulaire des colliers.

A titre d'exemple, un appareil du genre montré en figure 6 a été réalisé sous forme d'un empilement ayant une longueur de 40 à 60 mm et une section sensiblement carrée d'environ 70 mm de côté. Les actionneurs piézo-électriques permettaient d'exercer une force de compression de 3C0 dN et une force de traction de 70 dN. Ils étaient constitués par un empilement de pastilles et fonctionnaient sous une tension de 100 volts. L'alimentation, à partir d'une tension continue de 27 volts disponible à bord des aéronefs, comportait un circuit de découpage en fréquence et un transformateur élévateur de tension permettant d'obtenir une tension d'environ 100 volts. Le secondaire de ce transformateur alimentait, par l'intermédiaire d'interrupteurs, constitués par exemple par des transistors, des actionneurs piézo-électriques. Le séquencement des opérations était réalisé par un circuit électronique.

Il serait également possible de réaliser un appareil fonctionnant sous la tension de 27 volts disponible à bord des aéronefs, à condition d'utiliser, au lieu d'actionneurs piézo-électriques constitués par un empilement de pastilles classiques, des éléments, maintenant disponibles, ayant des revêtements en couche mince.

Le séquencement des interrupteurs, dans le cas du mode de réalisation de la figure 6, est par exemple le suivant, pour l'un des sens de rotation.

Dans l'état initial de l'appareil et au repos, aucun actionneur n'est excité. Les deux colliers 12a et 12b sont serrés sur l'arbre 10 et ce dernier est immobilisé.

La première étape consiste à desserrer le collier 12b du second couple, en excitant l'actionneur 14b, et à laisser l'actionneur 14a désexcité.

On excite ensuite le second actionneur 16a du premier couple pour faire avancer le collier 12a et l'arbre 10 d'un pas.

On désexcite l'actionneur 14b pour immobiliser l'arbre, on desserre le collier 12a en excitant l'actionneur 14a puis on désexcite le second actionneur 14a du premier couple. Le collier 12a revient dans son état d'origine sans entraîner l'arbre.

Le même processus est répété jusqu'à ce que le déplacement angulaire souhaité soit obtenu.

## Revendications

1. Appareil piézoélectrique d'entraînement d'un arbre en rotation, pas à pas, comprenant :
au moins un collier (12) entourant l'arbre (10) et serrable sur l'arbre pour immobiliser l'arbre en rotation par rapport à un boîtier (18), commandé par un premier actionneur piézoélectrique ;
deux seconds actionneurs piézoélectriques (16a, 16b) ayant avec l'arbre un couplage permettant à chacun d'eux de faire tourner l'arbre d'un pas d'avance déterminé par rapport au boîtier lorsqu'il est excité et de revenir à son état d'origine sans faire tourner l'arbre lorsqu'il est désexcité, les seconds actionneurs faisant tourner l'arbre dans deux sens opposés ; et
des moyens de commande des actionneurs, suivant une séquence déterminée.

2. Appareil selon la revendication 1, caractérisé en ce qu'il comprend deux premiers actionneurs (14a, 14b) associés chacun à un collier (12a, 12b).

3. Appareil selon la revendication 2, caractérisé en ce que les actionneurs sont répartis en deux couples comprenant chacun un premier actionneur (14a ou 14b) et un second actionneur (16a ou 16b) qui est interposé entre le boîtier (18) et le collier (12a ou 12b) du premier actionneur correspondant de façon à entraîner le collier d'un pas angulaire lorsqu'il est excité.

4. Appareil selon la revendication 3, caractérisé en ce que le collier (12) ou chaque collier (12a, 12b) est fendu et en ce que le premier ou chaque premier actionneur est interposé entre les extrémités du collier respectif, de façon à desserrer le collier lorsqu'il est excité.

5. Appareil selon la revendication 3 ou 4, caractérisé en ce que les moyens de commande sont constitués de façon à répéter une séquence d'opérations comprenant :
le serrage du collier (12a) d'un premier couple et le desserrage du collier (12b) du second couple,
l'excitation du second actionneur (16a) du premier couple pour faire avancer l'arbre d'un pas,
le desserrage du collier (12a) du premier couple en serrant le collier (12b) du second couple,
la désexcitation du second actionneur (16a) du premier couple pour lui permettre de revenir dans son état d'origine.

6. Appareil selon la revendication 3, 4 ou 5, caractérisé en ce que le ou chaque second actionneur (16) est disposé dans le même plan, orthogonal à l'arbre, que le premier actionneur respectif (14).

7. Appareil selon la revendication 3, 4 ou 5, caractérisé en ce que chaque second actionneur est porté par une galette appartenant au boîtier (18) et accolée à une autre galette constituant le collier et portant le premier actionneur respectif.
